# EUROPÄISCHE PATENTSCHRIFT

(11) **EP 3 180 989 B1**
(45) Veröffentlichungstag und Bekanntmachung des Hinweises auf die Patenterteilung: **05.02.2020**
(21) Anmeldenummer: 15200441.2
(22) Anmeldetag: 16.12.2015
(51) Int. Cl.: A23G 3/02, A21C 11/10, A21C 11/16, A22C 7/00, A22C 11/00

(54) **VERFAHREN UND VORRICHTUNG ZUM HERSTELLEN VON LEBENSMITTELPRODUKTEN, INSBESONDERE VON HÜLLENLOSEN PRODUKTEN EINER BESTIMMTEN FORM**
METHOD AND DEVICE FOR THE PRODUCTION OF FOOD PRODUCTS, IN PARTICULAR CASING-LESS PRODUCTS OF A SPECIFIC SHAPE
PROCÉDÉ ET DISPOSITIF DE FABRICATION DE PRODUITS ALIMENTAIRES, EN PARTICULIER DE PRODUITS SANS ENVELOPPE D'UNE FORME DÉFINIE

(43) Veröffentlichungstag der Anmeldung: 21.06.2017
(73) Patentinhaber: Albert Handtmann Maschinenfabrik GmbH & Co. KG, 88400 Biberach (DE)
(72) Erfinder: Teufel, Daniel, 88433 Schemmerhofen (DE); Werner, Achim, 88437 Maselheim (DE)
(74) Vertreter: Grünecker Patent- und Rechtsanwälte PartG mbB

(56) Entgegenhaltungen:
- WO-A1-96/23415
- US-A- 4 910 661
- US-A1- 2012 088 023
- US-A1- 2013 034 633
- US-B1- 6 280 785

## Beschreibung

Die Erfindung betrifft ein Verfahren und eine Vorrichtung zum Herstellen von Lebensmittelprodukten, insbesondere hüllenlosen Produkten einer vorbestimmten Form. Die WO96/23415A1 beschreibt bereits eine Vorrichtung und ein Verfahren zum Herstellen von Lebensmittelprodukten, bei denen das Lebensmittelprodukt über eine Düse ausgestoßen wird. Es wird bereits beschrieben, dass der Anwender verschiedene Formen auswählen kann. Ferner gibt es einen Bildschirm, auf dem eine neue Form ausgewählt werden kann. Aus der US4910661A ist bereits eine Vorrichtung bekannt zum Aufbringen von dekorativen Material auf Kuchen oder anderen Lebensmittelprodukten.

Es sind bereits unterschiedliche Verfahren zum Formen von pastösen Produkten in der Lebensmittelindustrie bekannt. Beispielsweise ist ein Verfahren bekannt, bei dem zwei Formplatten linear gegeneinander bewegt werden, um den Querschnitt der Durchgangsöffnung, durch die ein Lebensmittelstrang gefördert wird, zu verändern. Mit entsprechenden Verfahren können Lebensmittelprodukte, wie beispielsweise wurstförmige Produkte, Kugeln oder zylindrische Formteile mit abgerundeten Enden oder tropfenförmige Produkte etc. hergestellt werden.

Zum Erzeugen von beispielsweise abgerundeten Enden, Kugeln etc. werden auch bereits sogenannte Diaphragmen verwendet, die mehrere Abteilelemente aufweisen, die sich in Form einer Irisblende auf und zu bewegen können.

Bei der Herstellung von geformten Lebensmittelprodukten können unterschiedliche Parameter in eine Maschine eingegeben werden. Wie die Form tatsächlich aussieht, kann der Bediener nur schlecht beurteilen. Durch Verstellung eines Parameters ändert sich meistens die Form nicht nur in den gewünschten Richtungen, sondern die Proportionen der gesamten Form verändern sich. Über weitere Parameterveränderungen muss dann die Form wieder korrigiert werden. Damit die Produktform überwacht bzw. bestimmt werden kann, muss aber das Produkt zunächst produziert werden. Erst jetzt kann die Produktform bewertet werden. Durch Verstellen von Parametern kann nun die Produktform erneut verändert werden. Nun muss jedoch das Produkt erneut hergestellt werden, um die neue Produktform zu bewerten. Dieser Vorgang wird so oft wiederholt, bis die gewünschte Form eingestellt ist. Oft ist es auch schwierig, das hergestellte Lebensmittelprodukt aufzufangen, nachdem es produziert wurde, um die Form zu bewerten. Wenn das System z.B. über einem Brühkessel steht, in den die Produkte fallen oder mit hohem Tempo produziert wird, können die Produkte schwer aufgefangen und beurteilt werden.

Hiervon ausgehend liegt der vorliegenden Erfindung die Aufgabe zugrunde, ein Verfahren und eine Vorrichtung zum Herstellen von geformten Lebensmittelprodukten, insbesondere Würsten bereitzustellen, die ein einfaches und exaktes Einstellen einer gewünschten Lebensmittelproduktform ermöglichen.

Erfindungsgemäß wird diese Aufgabe durch die Merkmale der Ansprüche 1 und 7 gelöst.

Erfindungsgemäß werden zum Herstellen von Lebensmittelprodukten einer bestimmten Form Formparameter in eine entsprechende Maschine bzw. eine Maschinensteuerung eingegeben. In Abhängigkeit dieser Formparameter kann dann die Form des Lebensmittelprodukts als 2D- oder 3D-Grafik auf einem entsprechenden Bildschirm dargestellt werden. Der Bediener kann somit unmittelbar die Form des Lebensmittelprodukts in Abhängigkeit der eingegebenen Formparameter erkennen. Verstellt der Bediener einen Formparameter, so kann er gleich erkennen, welche Auswirkungen eine entsprechende Änderung auf die Proportionen der gesamten Form hat. Der Bediener kann somit die Form korrigieren, ohne dass er zunächst ein entsprechendes Lebensmittel produzieren muss. Somit kann der Bediener viel schneller als im Stand der Technik eine gewünschte Lebensmittelform produzieren. Fehleinstellungen sind sofort erkennbar und korrigierbar. Durch Verändern einzelner Formparameter kann der Bediener die gewünschte Form auf einfache Art und Weise einstellen, da er sie sofort grafisch sieht. Auf der Grundlage der entsprechenden Formparameter können dann Prozessparameter berechnet werden, auf deren Grundlage dann die Vorrichtung zum Herstellen und Formen der Lebensmittelprodukte angesteuert wird. Das erfindungsgemäße Verfahren bringt somit sowohl eine Zeit- als auch Kostenersparnis mit sich und ermöglicht das Produzieren von Lebensmittelprodukten mit optisch ansprechender Form.

Bei dem erfindungsgemäßen Verfahren kann auch die Reihenfolge der letzten beiden Prozessschritte vertauscht sein, d.h. Anspruch 1 ist nicht auf die konkrete Reihenfolge beschränkt. Das bedeutet, dass die Form des Lebensmittelprodukts in Abhängigkeit der eingegebenen Formparameter grafisch dargestellt werden kann und erst dann oder gleichzeitig in Abhängigkeit der Formparameter die Prozessparameter z.B. unter Verwendung der eingegebenen Formparameter oder der berechneten Grafikdaten berechnet werden können.

Es ist auch möglich, dass die Prozessparameter in Abhängigkeit der Formparameter berechnet werden und dann die entsprechende Form des Lebensmittelprodukts grafisch dargestellt wird. Dabei können dann die Grafikdaten entweder z.B. unter Verwendung der eingegebenen Formparameter oder aber unter Verwendung der berechneten Prozessparameter berechnet werden.

Die grafisch dargestellte Form des Lebensmittelprodukts ist gemäß der Erfindung durch Eingabe veränderbarer Formparameter veränderbar. Das heißt, dass der Bediener die Form, die als Grafik dargestellt ist, solange verändern kann, bis alle Parameter die gewünschte Form ergeben. Beim Verändern der Formparameter ändert sich dann entsprechend die dargestellte Form des Lebensmittelprodukts auf dem Bildschirm und es werden entsprechend veränderte Prozessparameter berechnet. Die Prozessparameter können dabei entweder bei jeder Veränderung mitverändert (bzw. berechnet) werden oder aber auch erst berechnet werden, wenn der Bediener eine bestimmte ausgewählte Form des Lebensmittelprodukts bestätigt. Das heißt, dass, wenn bestimmt wird, dass das Lebensmittel auf der Grundlage einer bestimmten dargestellten Form produziert werden soll, eine Bestätigung eingegeben wird, worauf das Lebensmittel produziert werden kann.

Als Formparameter wird mindestens ein Parameter aus folgender Gruppe eingegeben werden: Länge des geformten Lebensmittelprodukts, Durchmesser des geformten Lebensmittelprodukts, insbesondere Wurstkaliber, Länge der vorderen und/oder hinteren Kuppe des Lebensmittelprodukts, Länge des Lebensmittelprodukts mit konstantem Durchmesser, Änderung des Durchmessers in Abhängigkeit der Lebensmittelproduktlänge, Anzahl der Durchmesseränderungen pro Strecke.

Vorteilhafterweise werden die Lebensmittelprodukte mit einer Formvorrichtung gefertigt, die derart ausgebildet ist, dass der Querschnitt einer Durchgangsöffnung, durch die ein Lebensmittelstrang zum Formen transportiert wird, in Abhängigkeit der Zeit oder des zurückgelegten Ausstoßweges des Produkts verändert wird. Somit kann die Form des Lebensmittelprodukts beliebig gestaltet werden. Vorzugsweise umfasst die Formvorrichtung mindestens zwei, vorzugsweise mehr als zwei in Transportrichtung des Lebensmittelstrangs übereinanderliegende flache Verdrängerelemente, die jeweils mindestens eine Öffnung aufweisen, durch die der Lebensmittelstrang in Transportrichtung bewegbar ist. Ferner umfasst diese Vorrichtung einen Bewegungsmechanismus zum Bewegen der flachen Verdrängerelemente (vorzugsweise auf einer gekrümmten Bahn) derart, dass die jeweiligen Öffnungen relativ zueinander bewegbar sind, so dass sich die Querschnittsfläche der resultierenden Gesamtöffnung der sich überlagernden Öffnungen ändert.

Als Prozessparameter kann mindestens ein Parameter aus folgender Gruppe berechnet werden: Förderleistung des Lebensmittels, insbesondere Förderleistung in Abhängigkeit der Zeit. Das heißt, dass entweder eine bestimmte konstante Förderleistung des Lebensmittels eingestellt wird, beispielsweise indem die Förderleistung einer Förderpumpe einer Füllmaschine eingestellt wird, oder aber die Förderleistung variiert, um bestimmte Produktformen herzustellen. Auch die Geschwindigkeit der oben genannten Verdrängerelemente zu bestimmten Zeitpunkten bzw. in Abhängigkeit der Zeit bzw. über die Länge des Produkts, kann berechnet werden. Weiter kann die Richtung der Bewegung der Verdrängerelemente berechnet werden. Auch die Position der Verdrängerelemente in Abhängigkeit der Zeit, d.h. über die Länge eines Lebensmittelprodukts kann berechnet werden, derart, dass sich an den jeweiligen Positionen des zu fertigenden Produkts eine Öffnung mit einer bestimmten Querschnittsfläche ergibt. Auch die Position eines Trennmessers, z.B. zum Durchtrennen und Formen von Hackfleisch, kann in Abhängigkeit der Zeit oder des zurückgelegten Ausstoßwegs des Lebensmittelprodukts und gegebenenfalls noch die Geschwindigkeit des Transportmittels, auf dem das Produkt, z.B. das Hackfleisch gefördert wird, berechnet werden. Dabei kann das Trennmesser in einer Richtung schräg oder senkrecht zur Transportrichtung des Lebensmittelpunkts bewegt werden und/oder optional auch in oder entgegen der Transportrichtung.

Die Formparameter können beispielsweise über eine Eingabeeinheit als Zahlenwert eingegeben werden, indem beispielsweise über eine Tastatur eine entsprechende Zahl eingegeben wird, oder über +/- Tasten ein entsprechender Wert oder eine prozentuale Angabe eingegeben wird.

Es ist jedoch auch möglich, die Form des grafisch dargestellten Lebensmittels auf der grafischen Benutzeroberfläche eines Bildschirms zu ändern. Dies kann insbesondere mit Hilfe eines Touchscreens erfolgen. Hier kann der Bediener beispielsweise die Abmessungen durch Auseinander- oder Zusammenziehen der angezeigten Produktform ändern. Dabei kann beispielsweise mindestens ein Symbol oder Cursor angezeigt werden, an dem der Bediener z.B. mit seinen Fingern ansetzen kann. Der Bediener kann gemäß einer weiteren Ausführungsform auch einfach im äußeren Bereich des dargestellten Produkts ansetzten.

Alternativ zu einem Touchscreen kann auf der grafischen Benutzeroberfläche des Bildschirms auch ein bewegliches Symbol angezeigt werden, über dessen Bewegung die Form des Lebensmittels geändert werden kann, beispielsweise durch Betätigung der Richtungspfeile auf der Tastatur. Das bewegliche Symbol kann auch ein Mauszeiger sein.

Es ist also auch möglich, dass die Form des Lebensmittels durch Bewegen eines auf der grafischen Benutzeroberfläche des Bildschirms dargestellten Mauszeigers mit Hilfe einer Maus verändert wird. Der Mauszeiger wird dann an einem äußeren Bereich der dargestellten Form angesetzt oder an mindestens einem dargestellten Symbol.

Möglich ist auch, eine Kontur am Bildschirm aufzuzeichnen oder eine Grafik in die Steuerung zu importieren und zur weiteren Verarbeitung der Daten zu verwenden.

Sollte (beispielsweise mit Hilfe eines Mauszeigers oder eine andere Eingabe) eine Form eingestellt werden, die mit Hilfe der verwendeten Formvorrichtung nicht erzeugt werden kann, wird z.B. ein akustisches oder optisches Warnsignal ausgegeben. Dabei verändern die Parameter, die der Bediener anpassen muss, damit die Form produziert werden kann z.B. ihre Farbe. Dem Bediener wird vorzugsweise auch angezeigt, in welche Richtung er den Parameter verstellen muss, damit die Form produziert werden kann. Wird die Form auf der grafischen Benutzerfläche verändert und eine Form wird eingestellt, die nicht hergestellt werden kann, so wird z.B. ebenfalls ein Warnsignal angezeigt oder ausgegeben, oder aber die Form wird automatisch auf eine möglichst ähnliche Form korrigiert.

Wenn sowohl eine Eingabeeinheit für Zahlenwerte, als auch eine Änderung auf der grafischen Benutzeroberfläche des Bildschirms vorgesehen sind, so ändern sich die in einer Eingabeeinheit veränderten Werte gleichzeitig für die andere Eingabeeinrichtung mit und werden dort entsprechend dargestellt.

Eine Vorrichtung zum Herstellen von Lebensmittelprodukten gemäß dem Anspruch 7 umfasst eine Einrichtung zum Ausstoßen eines Lebensmittelstrangs, beispielsweise eine Füllmaschine. An diese Einrichtung schließt sich eine Formvorrichtung an, zum Formen der Lebensmittelprodukte. Weiter weist die Vorrichtung eine Eingabeeinrichtung auf, zum Eingeben von Formparametern. Schließlich umfasst die Vorrichtung eine erste Berechnungseinrichtung zum Berechnen von Prozessparametern in Abhängigkeit der Formparameter. Außerdem umfasst die Vorrichtung einen Bildschirm zum Darstellen der Form des Lebensmittelprodukts als 2D- oder 3D-Grafik in Abhängigkeit der eingegebenen Formparameter. Es ist auch ausreichend, nur eine Seite der rotationssymmetrischen Produkte darzustellen. Es ist auch möglich, die Form aus mehreren Perspektiven darzustellen.

Die Vorrichtung kann auch eine zweite Berechnungseinrichtung aufweisen zum Berechnen von Grafikdaten in Abhängigkeit der eingegebenen Formparameter. Dabei ist es unerheblich, ob die zweite Berechnungseinrichtung die Grafikdaten unter der Verwendung der eingegebenen Formdaten oder auf der Grundlage der bereits berechneten Prozessdaten ermittelt.

Die Lebensmittelprodukte können mit einer Formvorrichtung gefertigt werden, die derart ausgebildet ist, dass der Querschnitt einer Durchgangsöffnung, durch den ein Lebensmittelstrang transportiert wird, in Abhängigkeit der Zeit oder des zurückgelegten Ausstoßweges des Produkts variiert. Gemäß einem bevorzugten Ausführungsbeispiel umfasst die Vorrichtung mindestens zwei, vorzugsweise mehr als zwei in Transportrichtung T eines Lebensmittelstrangs übereinanderliegende flache Verdrängerelemente, die jeweils mindestens eine Öffnung aufweisen, durch die der Lebensmittelstrang in Transportrichtung bewegbar ist und einen Bewegungsmechanismus zum Bewegen der flachen Verdrängerelemente derart, dass die jeweiligen Öffnungen relativ zueinander bewegbar sind, so dass sich die Querschnittsfläche der resultierenden Gesamtöffnung der sich überlagernden Öffnungen ändert. Vorzugsweise werden die Verdrängerelemente auf einer jeweils gekrümmten Bahn bewegt. Die flachen Verdrängerelemente können das Lebensmittel nicht nur formen, sondern auch komplett abschneiden, wenn die Querschnittsfläche der resultierenden Gesamtöffnung 0 ist. Somit kann auf ein gesondertes Schneidwerkzeug verzichtet werden.

Ferner kann die erfindungsgemäße Vorrichtung eine Eingabeeinrichtung aufweisen, die derart ausgebildet ist, dass Zahlenwerte eingegeben werden können und/oder dass die Form des grafisch dargestellten Lebensmittelprodukts veränderbar ist, insbesondere mit Hilfe eines Touchscreens oder eines auf der Benutzeroberfläche beweglichen Symbols.

Weiter kann ein Bestätigungsmittel, z.B. in Form eines Knopfs oder einer Eingabemöglichkeit vorgesehen sein, zum Bestätigen, dass das Lebensmittelprodukt auf der Grundlage des dargestellten Lebensmittelprodukts produziert werden soll.

Die Lebensmittelprodukte, insbesondere Hackfleischprodukte können mit einer Formvorrichtung geformt werden, die derart ausgebildet ist, dass sich ein Trennmesser in den Hackfleischstrang hinein bewegt und diesen trennt und formt, wobei die Position des Trennmessers in Abhängigkeit der Zeit oder des zurückgelegten Ausstoßweges des Lebensmittelprodukts verändert wird.

Es ist möglich, dass gemäß einer bevorzugten Ausführungsform mindestens ein Prozessparameter, insbesondere die Förderleistung, in die Vorrichtung z.B. über eine Eingabeeinrichtung eingegeben werden kann und weitere Prozessparameter in Abhängigkeit des mindestens einen eingegebenen Prozessparameters und der eingegebenen Formparameter berechnet werden.

Die Erfindung wird nachfolgend unter Bezugnahme folgender Figuren näher erläutert.
- Fig. 1: zeigt eine Bedieneinheit zum Eingeben von Formparametern und Darstellen der Form des Lebensmittelprodukts.
- Fig. 2: zeigt ein Ablaufdiagramm für eine Ausführungsform für ein Verfahren gemäß der vorliegenden Erfindung.
- Fig. 3: zeigt ein Ablaufdiagramm für ein weiteres Ausführungsbeispiel für ein Verfahren gemäß der vorliegenden Erfindung.
- Fig. 4: zeigt grobschematisch eine Seitenansicht einer Vorrichtung zum Herstellen von Lebensmittelprodukten mit einer Füllmaschine und mit einer Formvorrichtung.
- Fig. 5: zeigt grobschematisch eine Aufsicht auf einen Füllstromteiler mit einer Formvorrichtung.
- Fig. 6: zeigt grobschematisch eine Seitenansicht auf eine Formvorrichtung mit drei flachen Verdrängerelementen.
- Fig. 7a-7f: zeigen die Bewegung der Verdrängerelemente auf ihrer gekrümmten Bahn von einer Öffnungsposition zu einer Abtrennposition.
- Fig. 8: zeigt eine Bedieneinheit zum Eingeben von Formparametern und Darstellen der Form eines Hackfleischprodukts.
- Fig. 9: zeigt eine Bedieneinheit zum Eingeben von Formparametern und Darstellen einer Wurstform.
- Fig. 10: zeigt Verdrängerelemente einer Formvorrichtung gemäß einem weiteren Ausführungsbeispiel.

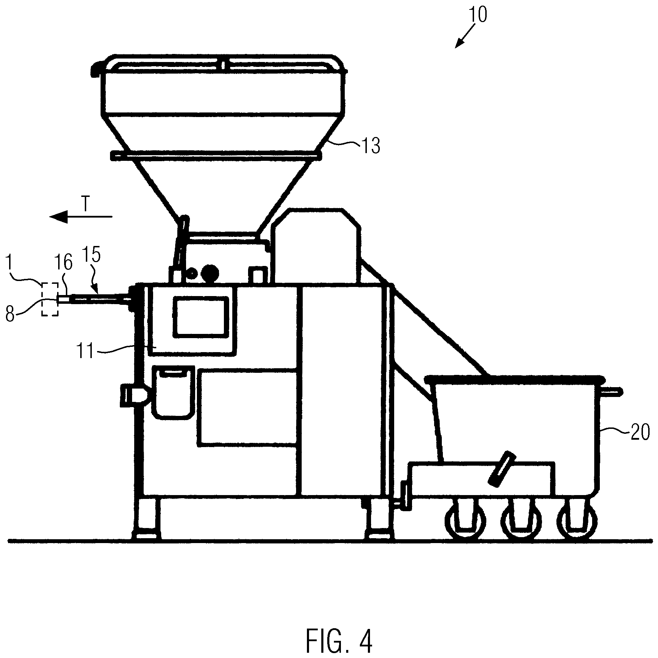

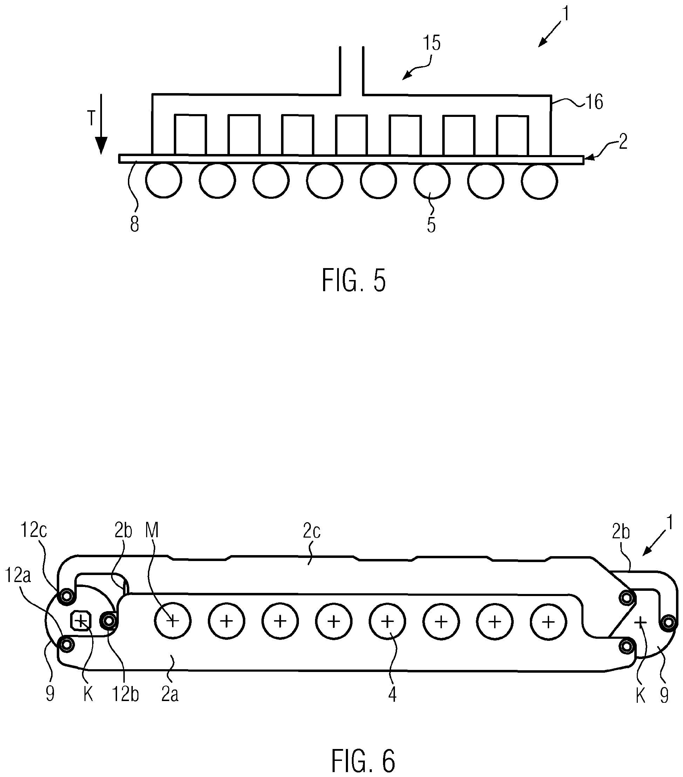

Fig. 4 zeigt eine Vorrichtung zum Herstellen geformter Lebensmittelprodukte mit einer Einrichtung 10 zum Ausstoßen eines Lebensmittelstrangs, hier einer Füllmaschine 10 sowie einer Formvorrichtung 1. Die Füllmaschine 10 weist einen Trichter 13 auf, zur Aufnahme von pastöser Masse, d.h. von pastösem Lebensmittel, wie beispielsweise Wurstbrät oder Kartoffelmasse etc. Das pastöse Lebensmittel kann beispielsweise über einen Brätwagen 20 und einer entsprechenden Hubeinrichtung angehoben und in den Trichter 13 eingekippt werden. Unterhalb des Trichters 13 befindet sich ein nicht eigens dargestelltes Förderwerk, insbesondere eine Flügelzellenpumpe, die das pastöse Lebensmittel in ein Füllorgan 15 schiebt. Das Füllorgan 15 kann beispielsweise ein Füllrohr umfassen, aus dem das Lebensmittel ausgestoßen wird. Das Füllorgan kann, wie insbesondere aus Fig. 5 hervorgeht, einen Füllstromteiler 16 umfassen, der den Füllstrom aufteilt und aus mehreren Ausstoßöffnungen beispielsweise acht Produkte parallel zueinander ausstößt. Die Füllmaschine weist weiter eine Steuerung auf, die beispielsweise auch die Berechnungseinrichtungen für die Grafikdaten bzw. Prozessdaten, die von gewählten Formparametern abhängen, aufweist. Außerdem weist die Füllmaschine ein Display, bzw. einen Bildschirm 21, der nachfolgend noch näher erläutert wird.

Um den ausgestoßenen Lebensmittelstrang zu formen, ist erfindungsgemäß die Formvorrichtung 1 vorgesehen, die, wie insbesondere aus Fig. 5 hervorgeht, dicht an den Ausstoßöffnungen 8 des Füllstromteilers oder aber der Ausstoßöffnung 8 des Füllrohrs angeordnet ist.

Die Formvorrichtung ist vorzugsweise derart ausgebildet, dass sie eine Durchgangsöffnung 4 aufweist, deren Querschnitt sich in Abhängigkeit der Zeit oder des zurückgelegten Ausstoßweges verändern kann, derart, dass die Außenkontur des Lebensmittels geformt werden kann oder aber das Lebensmittel vom Lebensmittelstrang abgetrennt werden kann. Die Formvorrichtung soll dabei nicht auf eine bestimmte Ausführungsform beschränkt werden. Somit kann beispielsweise auch ein Diaphragma mit mehreren Abteilelementen verwendet werden, die sich in Form einer Irisblende auf und zu bewegen können.

Ein besonders bevorzugtes Ausführungsbeispiel wird nachfolgend unter Bezugnahme der Fig. 6 bis 7 noch näher erläutert.

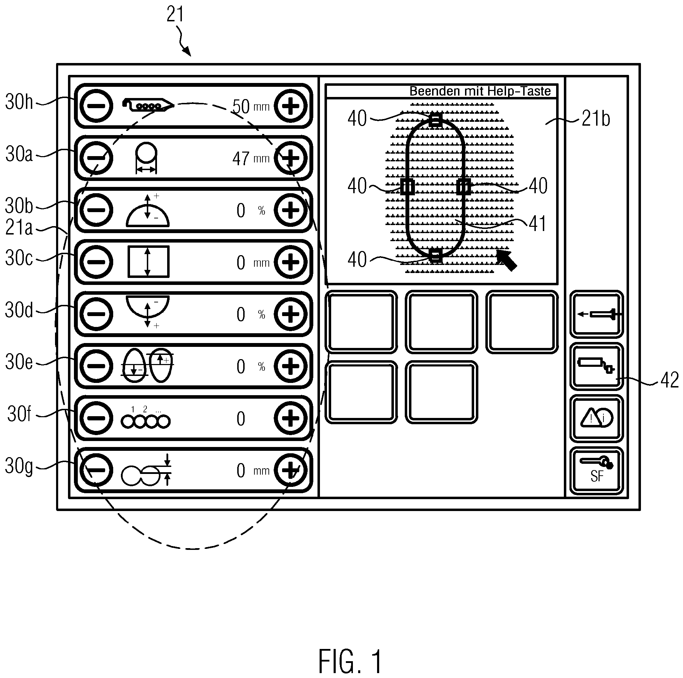

Fig. 1 zeigt eine Bedieneinheit, hier in Form eines Bildschirms 21. Der Bildschirm 21 umfasst eine Eingabeeinrichtung 21a, die derart ausgebildet ist, dass Zahlenwerte für diverse Formparameter eingegeben werden können (z.B. über Touchscreen oder Tasten). Als Formparameter kann beispielsweise im Feld 30a der Durchmesser des Lebensmittelprodukts als Zahlenwert eingegeben werden. Hier kann die Größe des Zahlenwerts beispielsweise, wie auch bei allen anderen Parametern, durch Betätigung einer +/- Taste eingestellt werden. Bei Verwendung eines Touchscreens kann der Zahlenwert auch direkt eingegeben werden. Wie in dem Feld 30b dargestellt ist, kann die Kuppenform eingestellt werden. Hier kann z.B. durch Eingabe eines Prozentwertes die vordere Kuppe, z.B. ausgehend von einer Kuppe, die halbkugelförmig ausgebildet ist, wobei z.B. der Kuppenradius dem halben Kaliber entspricht,spitziger oder flacher erzeugt werden als die zweite Kuppe, d. h. die Form des Produktendes kann von annähernd gerade abgeschnitten bis zu einer lang gezogenen Spitze vorbestimmt werden. Wie aus Feld 30c hervorgeht, kann auch die Länge des Lebensmittelprodukts mit konstantem Durchmesser eingegeben werden. Das Feld 30d entspricht im Wesentlichen dem Feld 30b und betrifft die gegenüberliegende zweite Kuppe des Lebensmittelprodukts. In dem Feld 30e kann ein tropfenförmiges Profil des Lebensmittels eingestellt werden. Das heißt, dass hier die Änderung des Durchmessers über die Länge des Produkts, bzw. die Änderung des Durchmessers innerhalb eines vorbestimmten Bereichs eingestellt werden kann. Bei diesem konkreten Ausführungsbeispiel kann in einem Bereich ausgehend von der Mitte des Produkts eine prozentuale Änderung des Durchmessers eingestellt werden.

Feld 30f kann verwendet werden für ein Produkt, dessen Durchmesser sich periodisch ändert. Hier kann die Anzahl aneinanderhängender Abschnitte des Produkts mit gleicher Form eingestellt werden. Im Feld 30g kann dazu der Durchmesser bzw. hier die Eintauchtiefe der Verdrängerelemente des zu produzierenden Lebensmittels einer bestimmten Form (z.B. Kugelform) eingestellt werden.

Im Feld 30h kann als Formparameter der Durchmesser einer Öffnung in einem Verdrängerelement einer Formvorrichtung festgelegt werden - entsprechend dem für einen entsprechenden Prozess verwendeten Verdrängerelement - da es möglich ist für unterschiedliche Prozesse Verdrängerelemente mit unterschiedlichen Öffnungsgrößen zu verwenden bzw. einzubauen.

Über die Eingabeeinrichtung 21a können also Formparameter als Zahlenwerte eingegeben werden. Aus diesen Formparametern berechnet eine entsprechende Berechnungseinrichtung dann entsprechende Grafikdaten, wobei die Form des Lebensmittelprodukts in Abhängigkeit der eingegebenen Formparameter in der Anzeige 21b als 2D- oder 3D-Grafik dargestellt werden kann. Somit kann der Bediener sofort die Produktform erfassen, die sich aufgrund der gewählten Formparameter ergibt und sofort entsprechende Korrekturen vornehmen, ohne dass das Lebensmittelprodukt eigens hergestellt werden muss. Der Bediener kann sofort erkennen, wie ein bestimmter Parameter die Gesamtform verändert.

Alternativ oder zusätzlich kann auch die Form des grafisch dargestellten Lebensmittelprodukts am Bildschirm 21b verändert werden. Dies kann beispielsweise derart bewerkstelligt werden, dass der Bildschirm, zumindest der Abschnitt 21b, als Touchscreen ausgebildet ist, und die Form durch Auseinanderziehen oder Zusammenziehen der Produktform geändert wird. Die Grafikdaten entsprechen den Formdaten.

Es können jedoch auch bewegliche Symbole 40 auf dem Bildschirm dargestellt sein, die dann in vorgegebene Richtungen bewegbar sind, beispielsweise durch Anklicken und mittels Richtungspfeilen oder mit Hilfe eines Mauszeigers. Ein Mauszeiger kann auch direkt an die Außenkontur der dargestellten Lebensmittelform angesetzt werden und somit durch Auseinander oder Zusammenziehen die Form entsprechend ändern. Eine entsprechende Form ist dann auf dem Bildschirm 21b dargestellt und entsprechende Formparameter werden gespeichert bzw. an eine weitere Berechnungseinrichtung weitergeleitet und dienen zum Berechnen von Prozessparametern für die Herstellung des Lebensmittelprodukts.

Mit 42 ist ein Bestätigungsmittel in Form einer Taste dargestellt, die bestätigt, dass die dargestellte Form in Ordnung ist, und dass auf der Grundlage von den entsprechenden Formparametern und den entsprechend berechneten Prozessparametern das Lebensmittelprodukt gefertigt werden soll.

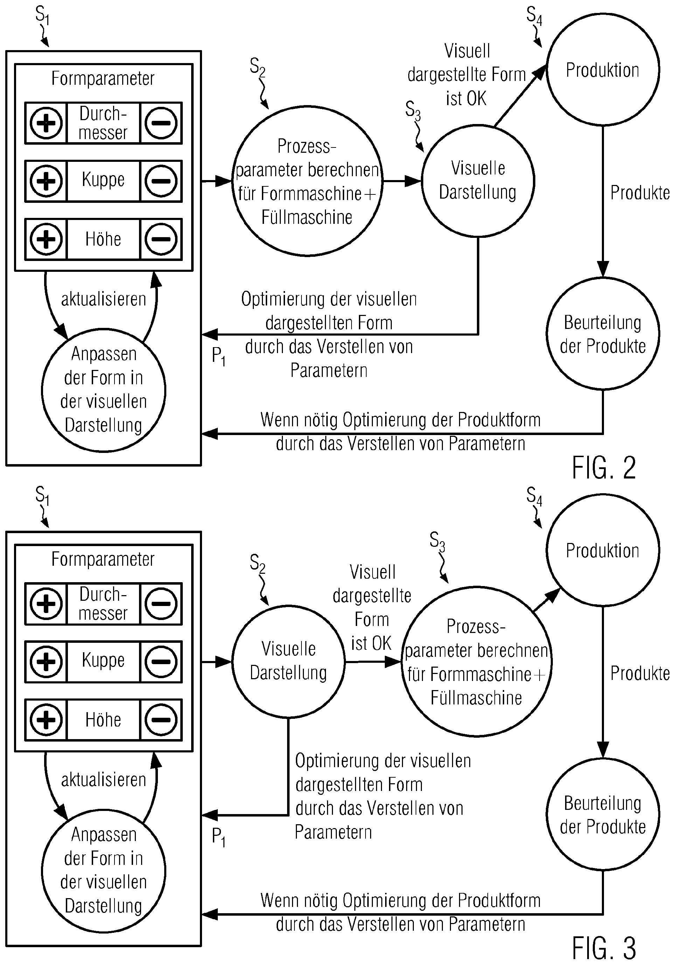

Fig. 2 zeigt eine mögliche Ausführungsform eines erfindungsgemäßen Verfahrens. In einem Schritt S1 werden zunächst wie zuvor beschrieben diverse Formparameter wie z.B. der Durchmesser, die Kuppengröße oder die Länge mit konstantem Durchmesser, d.h. die Höhe entweder über die Eingabeeinrichtung 21a über Zahlenwerte, oder aber über Ändern der Produktform über den Bildschirm 21b eingegeben. Auf der Grundlage entsprechender Formparameter werden Prozessparameter für die Formvorrichtung 1 und die Einrichtung 10 zum Ausstoßen des Lebensmittelstrangs berechnet. Entsprechende Prozessparameter können beispielsweise sein: Förderleistung des Lebensmittels, d.h. in diesem Fall Förderleistung des Förderwerks der Füllmaschine 10, gegebenenfalls auch die Änderung der Förderleistung in Abhängigkeit der Zeit. Auch die Position der Verdrängerelemente 2a,b,c in Abhängigkeit der Zeit bzw. über die Länge des Produzierten Lebensmittels kann eingestellt werden .Die Verdrängerelemente weisen jeweils mindestens eine Öffnung 3a,b,c auf, durch die der Lebensmittelstrang in Transportrichtung T bewegbar ist, wobei ein Bewegungsmechanismus die flachen Verdrängerelemente derart bewegt, dass die jeweiligen Öffnungen relativ zueinander bewegbar sind, so dass sich die Querschnittsfläche der resultierenden Gesamtöffnung 4 der sich überlagernden Öffnungen entsprechend einem gewünschten Produktquerschnitt ändert. Eine entsprechende Ausführungsform wird nachfolgend noch unter Bezugnahme der Fig. 6 bis 7 näher erläutert. Neben der Position der Verdrängerelemente in Abhängigkeit der Zeit kann auch die Geschwindigkeit der Verdrängerelemente in Abhängigkeit der Zeit berechnet werden, sowie die Bewegungsrichtung der Verdrängerelemente. Die Formvorrichtung wird auf jeden Fall derart eingestellt, dass die Querschnittsfläche der resultierenden Gesamtöffnung über die Länge des Lebensmittelprodukts an die gewünschte Lebensmittelform angepasst wird.

Wenn im Schritt S2 die Prozessparameter berechnet wurden, kann in Schritt S3 gleichzeitig oder nachfolgend die Form des Lebensmittelprodukts visuell dargestellt werden. Entspricht die Form nicht der gewünschten Form, so kann erneut im Schritt S1 die Form durch Ändern mindestens eines Formparameters angepasst werden. Erst wenn der Bediener feststellt, dass die dargestellte Form in Ordnung ist, kann er beispielsweise mittels Taste 42 bestätigen, dass die Produktion auf der Grundlage der gewählten Form und entsprechenden Prozessparameter durchgeführt wird. In einem Schritt S4 erfolgt dann die Produktion des Lebensmittelprodukts mit Hilfe der erfindungsgemäßen Vorrichtung, die mit den berechneten Prozessparametern angesteuert wird. Jetzt besteht nochmals die Möglichkeit, die produzierten Produkte zu beurteilen. Wenn nötig, kann die Produktform erneut optimiert werden, wobei die Produktion nicht zwangsläufig unterbrochen werden muss und im Schritt S1 erneut Formparameter angepasst werden können.

Fig. 3 zeigt eine leicht abweichende Variante des erfindungsgemäßen Verfahrens. Wie zuvor beschrieben, können in einem Schritt S1 entsprechende Formparameter eingegeben werden. Auf der Grundlage entsprechender zahlenmäßig eingegebener Formparameter oder aber durch Veränderung der Form des grafisch dargestellten Lebensmittelprodukts am Bildschirm wird eine entsprechende Form des Lebensmittelprodukts in einem Schritt S2 visuell dargestellt. Wie durch den Pfeil dargestellt ist, können, wenn die visuell dargestellte Form noch nicht in Ordnung ist, die Formparameter in dem Schritt S1 erneut geändert werden. Wenn die visuelle Darstellung der Form in Ordnung ist, kann beispielsweise wiederum z.B. über Taste 42 bestätigt werden, dass das Lebensmittel auf der Grundlage entsprechender Formparameter gefertigt werden soll. Es werden in Abhängigkeit der eingegebenen Formparameter entsprechende Prozessparameter für die Formvorrichtung und die Einrichtung zum Ausstoßen des Lebensmittelstrangs 10 berechnet, wobei z.B. entweder die eingegebenen Formparameter oder die Grafikdaten zur Berechnung verwendet werden können. In einem Schritt S4 erfolgt dann die Produktion, wobei ebenso wie bei dem in Fig. 2 gezeigten Verfahren das Produkt nochmals beurteilt werden kann und wenn nötig, die Produktform optimiert werden kann. Wenn wie in Fig. 2 und 3 durch Pfeile P₁ dargestellt ist, die visuell dargestellte Form durch das Verstellen von Parametern noch einmal geändert wird, wird sowohl die Form als auch die Angabe der Formparameter in den Anzeigenbereichen 21a und 21b aktualisiert.

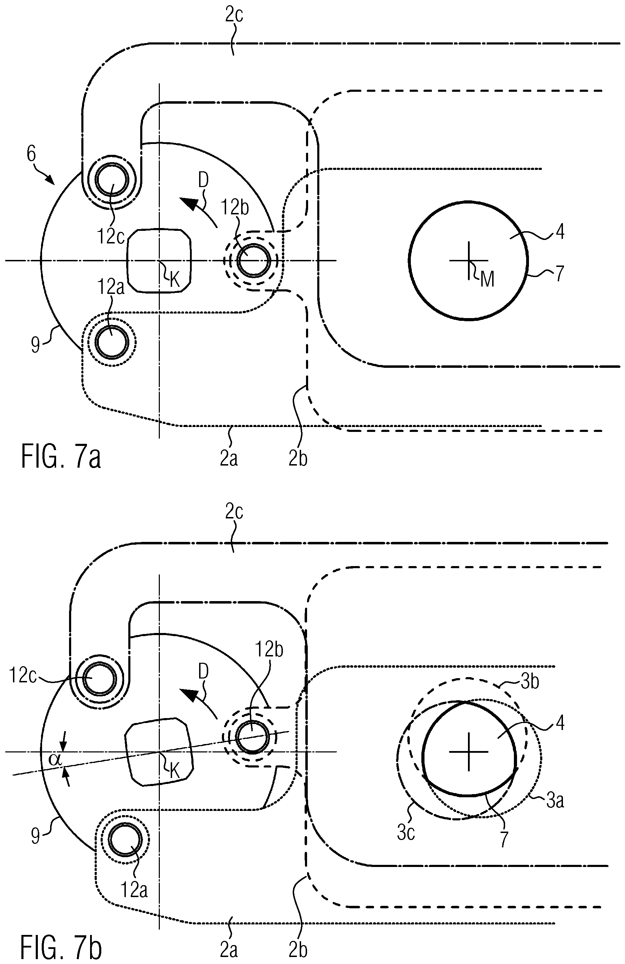

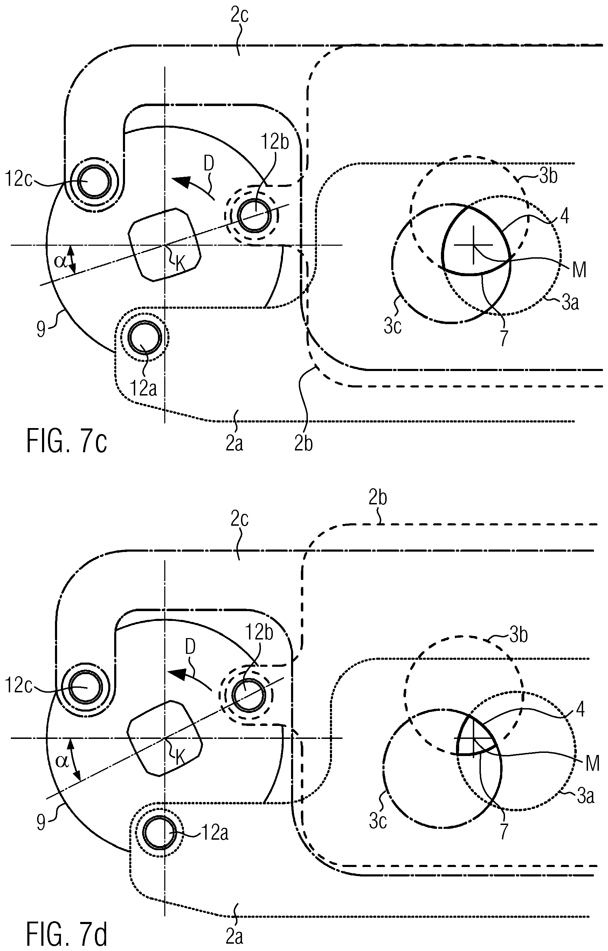

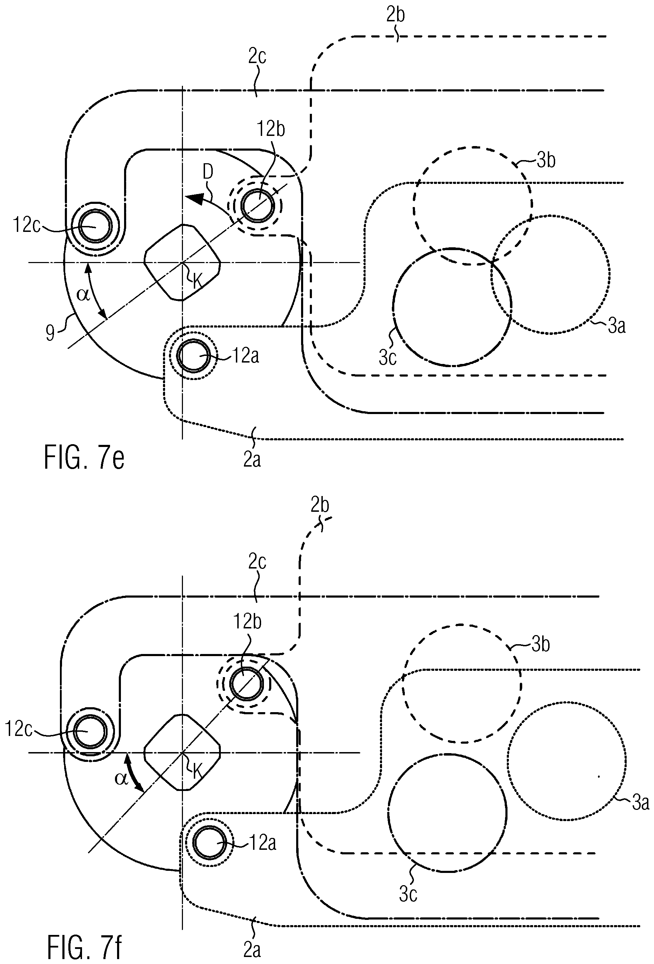

Eine mögliche Formvorrichtung wird jetzt nachfolgend unter Bezugnahme der Fig. 6 und 7 näher erläutert:
Die Formvorrichtung weist z.B. mindestens drei in Transportrichtung T des Lebensmittelstrangs übereinander liegende Verdrängerelemente 2a,b,c auf, wie beispielsweise aus Fig. 6 hervorgeht, die eine Formvorrichtung mit drei flachen Verdrängerelementen, hier: drei flachen Verdrängerplatten, zeigt. Die jeweiligen Verdrängerelemente 2a,b,c weisen jeweils mindestens eine Öffnung 3a,b,c auf. In dem in Fig. 6 gezeigten Ausführungsbeispiel weisen die jeweiligen Verdrängerelemente 2a,b,c insgesamt acht Öffnungen 3a,b,c auf, die jeweils nebeneinander auf den jeweiligen Verdrängerelementen angeordnet sind.

Die Formvorrichtung 1 weist weiter einen Bewegungsmechanismus 6 auf zum Bewegen der flachen Verdrängerelemente 2a,b,c auf jeweiligen gekrümmten Bahnen, derart, dass sich die jeweiligen Öffnungen 3a,b,c relativ zueinander bewegen können, so dass sich die Querschnittsfläche der resultierenden Gesamtöffnung 4 der sich überlagernden Öffnungen 3a,b,c ändert. Der Bewegungsmechanismus 6 weist in diesem Ausführungsbeispiel beispielsweise ein Drehteil, hier: eine drehbare Scheibe 9, auf, an deren Seitenfläche die flachen Verdrängerelemente 2a,b,c an Ankopplungspunkten 12a,b,c beispielsweise mit je einem Bolzen drehbar gelagert sind. Wie insbesondere aus Fig. 6 hervorgeht, sind die flachen Verdrängerelemente 2a,b,c an einem zweiten Drehteil, hier: Drehscheibe, an ihren gegenüberliegenden Enden ebenfalls an entsprechenden Ankopplungspunkten, beispielsweise über Bolzen, drehbar gelagert. Die Verdrängerelemente sind hier gleichmäßig um den Umfang des Drehteils 9 verteilt angeordnet, d.h. hier z.B. jeweils im Abstand von 120°.

Bei diesem Ausführungsbeispiel ist zumindest eines der Drehteile, hier: z.B. das in Fig. 6 gezeigte linke Drehteil 9, angetrieben, beispielsweise durch einen nicht dargestellten Motor, insbesondere Servomotor. Das auf der anderen Seite der Verdrängerelemente 2a,b,c angeordnete Drehteil dient dann lediglich zur Führung. Anstelle dieses Drehteils könnte auch eine entsprechende Kurvenführung etc. vorgesehen sein.

Fig. 7a zeigt einfachheitshalber nur einen Teilbereich der Formvorrichtung, mit den Verdrängerelementen 2a,b,c in einer Öffnungsposition O, in der die Querschnittsfläche der Gesamtöffnung 4 einen vorbestimmten maximalen Querschnitt aufweist. In diesem besonderen Ausführungsbeispiel überlagern sich dabei die einzelnen Öffnungen 3a,b,c der Verdrängerelemente 2a,b,c vollständig. Der Mittelpunkt M der resultierenden Gesamtöffnung 4 und der Mittelpunkt M der Ausstoßöffnung 8 des Ausstoßorgans fluchten miteinander. Die maximale Gesamtöffnung 4 weist dabei eine Querschnittsfläche auf, die in etwa der Querschnittsfläche des zugeführten Lebensmittelstrangs 5, bzw. der den Lebensmittelstrang erzeugenden Ausstoßöffnung 8 entspricht. Somit kann ein Aufstauen des Lebensmittelstrangs verhindert werden. Der Lebensmittelstrang kann durch die Ausstoßöffnung 8 hindurch durch die Gesamtöffnung 4 ausgestoßen werden. Das der Ausstoßöffnung 8 zugewandte Verdrängerelement bewegt sich dicht an der Ausstoßöffnung entlang mit so viel Spiel, dass das Verdrängerelement ungehindert über die Öffnung gleiten kann.

Aus der in der Fig. 7a gezeigten Öffnungsposition können sich die einzelnen Verdrängerelemente 2a,b,c entlang einer gekrümmten Bahn bewegen, in dem sich das Drehteil 9 in Drehrichtung D dreht. Fig. 7b zeigt die in Fig. 7a gezeigte Formvorrichtung, bei der sich das Drehteil um einen Winkel α in Drehrichtung D, hier: nach links, um die Mittelachse K gedreht hat.

Wie in Fig. 7b erkannt werden kann, bewegen sich bei der Bewegung der Verdrängerelemente entlang der gekrümmten Bahn auch die Öffnungen 3a,b,c. Da die Verdrängerelemente 2a,b,c verteilt am Umfang der Scheibe 9 angeordnet sind, bewegen sich die Verdrängerelemente auf unterschiedlichen gekrümmten Bahnen, derart, dass sich die Öffnungen 3a,b,c auseinander bewegen und die Querschnittsfläche der resultierenden Gesamtöffnung 4 kleiner wird. Der Mittelpunkt M der resultierenden Gesamtöffnung fluchtet immer noch mit dem Mittelpunkt M der Ausstoßöffnung 8. Durch eine entsprechende Überlagerung der Öffnungen 3a,b,c ergibt sich ein abgerundetes Dreieck. Fig. 7c zeigt die in Fig. 7a, 7b gezeigte Formvorrichtung, bei der das Drehteil 9 um einen Winkel α von ca. 20° im Vergleich zur Fig. 7a weitergedreht wurde. Wie beim Vergleich der Fig. 7b und 7c zu erkennen ist, bewegen sich die Kanten 7 der Öffnungen 3a,b,c, die die Gesamtöffnung 4 begrenzen, auf den Mittelpunkt M der Gesamtöffnung 4 von drei Seiten zu.

Fig. 7d zeigt für dieses Beispiel einen Drehwinkel α des Drehteils 9 von etwa 26°. Wie deutlich wird, bewegen sich die Verdrängerelemente 2a,b,c auf entsprechenden gekrümmten Bahnen, derart, dass die Öffnungen 3a,b,c sich derart überlagert, dass die Querschnittsfläche der resultierenden Gesamtöffnung 4, d.h. die Schnittmenge der Öffnungen weiter abnimmt und sich die Kanten 7 der Öffnungen, die die Gesamtöffnung 4 begrenzen, weiter auf den Mittelpunkt M der Gesamtöffnung 4 zu bewegen. Fig. 7e zeigt eine Bewegung des Drehteils 9 um einen Winkel α von ca. 37°. Hier ist die Fläche der Gesamtöffnung 4 Null, d.h., dass die Öffnungen 3a,b,c aller Verdrängerelemente keine gemeinsame Schnittmenge, d.h. keine resultierende Gesamtöffnung mehr aufweisen. In dieser Position wird der Lebensmittelstrang abgetrennt. Wie in Fig. 7f dargestellt ist, können sich die Verdrängerelemente 2a,b,c noch über diese Position hinaus bewegen, (wobei die Kanten 7 aneinander vorbeigleiten und das Lebensmittelprodukt abschneiden) hier: z.B. bis zu einem Winkel α von z.B. 45° um das Lebensmittel sauber abzutrennen. Auch hier gibt es keine Gesamtöffnung, keine Öffnung 3a,b,c schneidet eine andere Öffnung.

Aus den Positionen 7f oder 7e können die flachen Verdrängerelemente 2a,b,c dann wieder entgegen der Drehrichtung D zurück in die Ausgangsposition O, wie in Fig. 7a dargestellt ist, zurückbewegt werden. Dazu ist das Antriebsteil 9 vorzugsweise in zwei Drehrichtungen mittels Servoantrieb antreibbar. Durch die zuvor beschriebene Lagerung der Verdrängerelemente bleiben diese stets korrekt ausgerichtet, hier: horizontal, so dass der entsprechende Mittelpunkt M der Gesamtöffnung 4 stets mit dem Mittelpunkt M der Ausstoßöffnung 8 fluchtet, auch wenn mehrere Stränge parallel zueinander produziert werden, d.h. mehrere Ausstoßöffnungen 8 in Reihe angeordnet sind.

Es ist auch möglich, mehr als 3 Verdrängerelemente zu verwenden.

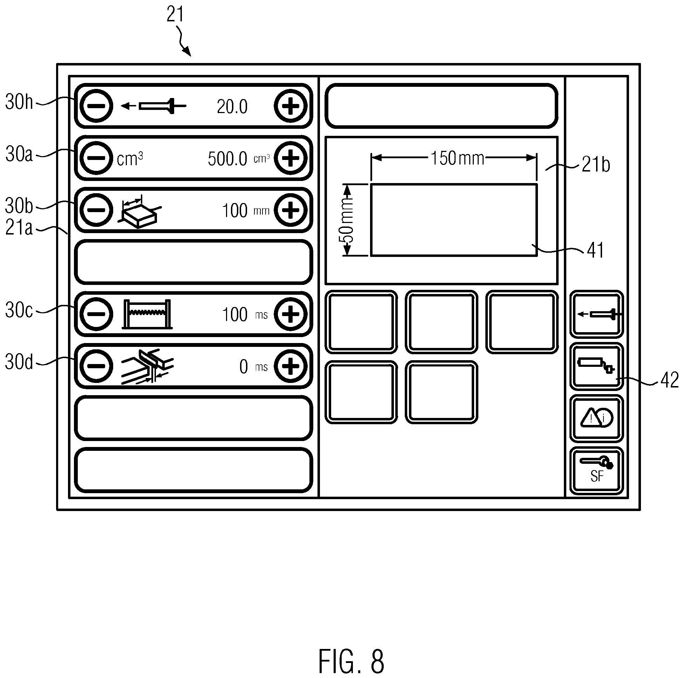

Die vorliegende Erfindung ist jedoch nicht auf die zuvor beschriebene Formvorrichtung beschränkt. Die vorliegende Erfindung ist ebenso beispielsweise zum Erzeugen von Hackfleischprodukten geeignet. Wie insbesondere aus Figur 8 hervorgeht, können über die Bedieneinheit 21a oder 21b wie auch in Zusammenhang mit den vorherigen Ausführungsbeispielen erläutert, Formparameter für die Hackfleischform eingegeben werden. Die Formvorrichtung umfasst hierbei beispielsweise ein Trennmesser, das das Lebensmittelprodukt durchtrennt, wobei das Trennmesser durch das Lebensmittelprodukt hindurch bewegt wird, während z.B. das Lebensmittelprodukt in Transportrichtung bewegt wird. Durch Ansteuern des Trennmessers, insbesondere der Position des Trennmessers in Abhängigkeit der Zeit oder des zurückgelegten Ausstoßweges des Hackfleisches bei einer bestimmten Transportgeschwindigkeit, kann die Form des Lebensmittelprodukts für das Hackfleisch beeinflusst werden (beispielsweise schräge Kanten, bestimmte Endformen etc. erzeugt werden). Dazu kann beispielsweise im Feld 30a das Volumen des einzelnen Hackfleischprodukts eingegeben werden, im Feld 30b die Länge des Hackfleischprodukts. Im Feld 30c wird eingestellt, wie lange die Schneidebewegung von einer oberen Position des Trennmessers zu einer unteren Position des Trennmessers und wieder zurück dauert . Weiter kann im Feld 30d der Startzeitpunkt der Bewegung des Trennmessers eingestellt werden.

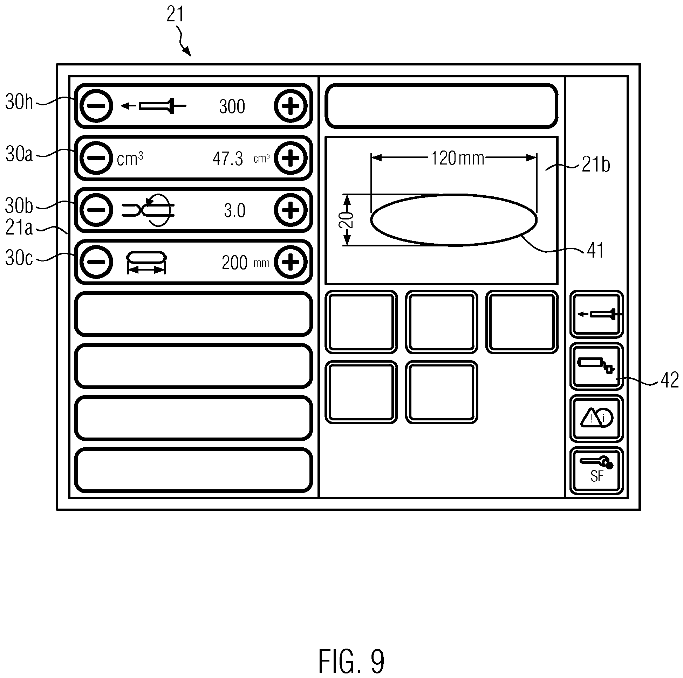

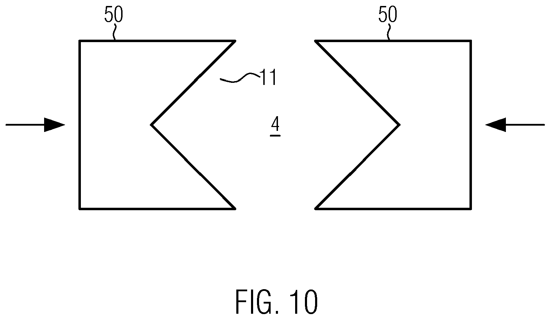

Fig. 9 zeigt ein weiteres Ausführungsbeispiel, bei dem z.B. die Form einer Wurst, die durch das Füllrohr einer Wurstmaschine ausgestoßen wird, dargestellt werden kann. Hier umfasst die Formvorrichtung beispielsweise zwei gegenüberliegende, in den Wurststrang eingreifende Abteilelemente bzw. Verdrängerelemente 50, wie sie beispielsweise in Figur 10 dargestellt sind. Die Verdrängerelemente 50 weisen gegenüberliegende Öffnungen 11 auf. Die Verdrängerelemente 50 bewegen sich von der Außenkontur eines erzeugten Wurststrangs in den Wurststrang hinein. Die Öffnungen 11 bilden zusammen eine Durchgangsöffnung 4, durch die die Wurst transportiert wird, wobei die Durchgangsöffnung in Abhängigkeit der Zeit oder des zurückgelegten Ausstoßweges des Lebensmittelprodukts verändert wird. Somit kann eine bestimmte Wurstkuppenform erzeugt werden, wobei die entsprechende Form graphisch wie bei den vorherigen Ausführungsbeispielen auf dem Display 21b angezeigt und auch geändert werden kann. In Figur 9 kann in der Eingabeeinheit 21b im Feld 30h beispielsweise das Tempo eingestellt werden. Im Feld 30a wird das Volumen der erzeugten Wurst eingestellt. Im Feld 30b wird die Anzahl der Abdrehungen eingegeben und im Feld 30c kann noch die Produktlänge eingestellt werden. Die Produkthöhe ergibt sich aus dem eingestellten Volumen und der eingestellten Produktlänge. Die Kuppenform oder auch die Wurstform ergibt sich aus der verwendeten Wursthülle und wie prall diese gefüllt wird.).Bei den vorher beschrieben Ausführungsbeispielen ist es auch möglich, zusätzlich zu den Formparametern auch mindestens einen Prozessparameter einzugeben bzw. zu wählen.

So kann beispielsweise die Förderleistung eingestellt werden und alle anderen Prozessparameter werden dann entsprechend berechnet, um die gewünschte Form auf der Grundlage der Formparameter zu realisieren. Das bedeutet, dass beispielsweise die Förderleistung geändert werden kann und dennoch die Form gleichbleibt.

## Patentansprüche

1. Verfahren zum Herstellen von Lebensmittelprodukten, insbesondere hüllenlosen Produkten einer bestimmten Form mit folgenden Schritten:
- Eingeben von Formparametern,
- Darstellen der Form (41) des Lebensmittelprodukts in Abhängigkeit der eingegebenen Formparameter als 2D- oder 3D-Grafik,
- Berechnen von Prozessparametern in Abhängigkeit der eingegebenen Formparameter, wobei
- als Formparameter mindestens ein Parameter aus folgender Gruppe eingegeben wird:
Länge des geformten Lebensmittelprodukts, Durchmesser des geformten Lebensmittelprodukts, insbesondere Wurstkaliber, Länge der vorderen und/oder hinteren Kuppe des Lebensmittelprodukts, Länge des Lebensmittelprodukts mit konstantem Durchmesser, Änderung des Durchmessers in Abhängigkeit der Lebensmittelproduktlänge, Anzahl der Durchmesseränderungen pro Strecke, wobei die grafisch dargestellte Form des Lebensmittelprodukts durch Eingabe veränderter Formparameter veränderbar ist und auf der Grundlage der veränderten Formparameter eine veränderte grafische Darstellung erfolgt und entsprechend veränderte Prozessparameter berechnet werden.

2. Verfahren nach Anspruch 1, **dadurch gekennzeichnet, dass** entweder
- die Form des Lebensmittelprodukts in Abhängigkeit der eingegebenen Formparameter grafisch dargestellt wird und dann oder gleichzeitig entsprechende Prozessparameter berechnet werden oder
- dass die Prozessparameter in Abhängigkeit der eingegebenen Formparameter berechnet werden und dann die entsprechende Form des Lebensmittelprodukts grafisch dargestellt wird.

3. Verfahren nach mindestens einem der Ansprüche 1 bis 2, **dadurch gekennzeichnet, dass**, wenn bestimmt wird, dass das Lebensmittel auf der Grundlage einer bestimmten dargestellten Form produziert werden soll, eine Bestätigung eingegeben wird, worauf das Lebensmittel produziert wird.

4. Verfahren nach mindestens einem der Ansprüche 1 bis 3, **dadurch gekennzeichnet, dass**
die Lebensmittelprodukte mit einer Formvorrichtung (1) gefertigt werden, die derart ausgebildet ist, dass der Querschnitt einer Durchgangsöffnung (4), durch den ein Lebensmittelstrang zum Formen transportiert wird, in Abhängigkeit der Zeit oder des zurückgelegten Ausstoßweges des Lebensmittelprodukts verändert wird und vorzugsweise
das Lebensmittelprodukt mit mindestens zwei, vorzugsweise mehr als zwei in Transportrichtung eines Lebensmittelstrangs (5) übereinanderliegenden flachen Verdrängerelementen (2a,b,c), die jeweils mindestens eine Öffnung (3a,b,c) aufweisen, durch die der Lebensmittelstrang (5) in Transportrichtung bewegbar ist, hergestellt werden und einen
Bewegungsmechanismus (6) zum Bewegen der flachen Verdrängerelemente (2a,b,c) derart, dass die jeweiligen Öffnungen relativ zueinander bewegbar sind, so dass sich die Querschnittsfläche der resultierenden Gesamtöffnung der sich überlagernden Öffnungen ändert.

5. Verfahren nach mindestens einem der Ansprüche 1 bis 4, **dadurch gekennzeichnet, dass** als Prozessparameter mindestens ein Parameter aus folgender Gruppe berechnet wird: Förderleistung des Lebensmittels, insbesondere Förderleistung in Abhängigkeit der Zeit, Geschwindigkeit von Verdrängerelementen in Abhängigkeit der Zeit, Richtung der Bewegung der Verdrängerelemente, Position der Verdrängerelemente in Abhängigkeit der Zeit oder des zurückgelegten Ausstoßweges des Lebensmittelprodukts, Position eines Trennmessers in Abhängigkeit der Zeit oder des zurückgelegten Ausstoßweges des Lebensmittelprodukts, Fördergeschwindigkeit des Lebensmittelprodukts.

6. Verfahren nach mindestens einem der Ansprüche 1 bis 5, **dadurch gekennzeichnet, dass** die Formparameter
über eine Eingabeeinheit (21a) als Zahlenwerte eingegeben werden und/oder
durch Ändern der Form des grafisch dargestellten Lebensmittels auf der grafischen Benutzeroberfläche des Bildschirms (21b), insbesondere mit Hilfe eines Touchscreens oder durch Bewegen eines auf der grafischen Benutzeroberfläche des Bildschirm dargestellten Symbols.

7. Vorrichtung zum Herstellen von Lebensmittelprodukten, insbesondere hüllenlosen Produkten, insbesondere mit einem Verfahren nach mindestens einem der Ansprüche 1 bis 6 oder 12 und 13, mit
einer Einrichtung zum Ausstoßen eines Lebensmittelstrangs,
einer Formvorrichtung (1) zum Formen von Lebensmittelprodukten,
einer Eingabeeinrichtung zum Eingeben von Formparametern,
einer ersten Berechnungseinrichtung zum Berechnen von Prozessparametern in Abhängigkeit der Formparameter,
einem Bildschirm (21b) zum Darstellen der Form des Lebensmittelprodukts als 2D- oder 3D-Grafik in Abhängigkeit der eingegebenen Formparameter, wobei
als Formparameter mindestens ein Parameter aus folgender Gruppe eingegeben werden kann:
Länge des geformten Lebensmittelprodukts, Durchmesser des geformten Lebensmittelprodukts, insbesondere Wurstkaliber, Länge der vorderen und/oder hinteren Kuppe des Lebensmittelprodukts, Länge des Lebensmittelprodukts mit konstantem Durchmesser, Änderung des Durchmessers in Abhängigkeit der Lebensmittelproduktlänge, Anzahl der Durchmesseränderungen pro Strecke, wobei die grafisch dargestellte Form des Lebensmittelprodukts durch Eingabe veränderter Formparameter veränderbar ist und auf der Grundlage der veränderten Formparameter eine veränderte grafische Darstellung erfolgt und entsprechend veränderte Prozessparameter berechnet werden.

8. Vorrichtung nach Anspruch 7, **dadurch gekennzeichnet, dass** eine zweite Berechnungseinrichtung vorgesehen ist zum Berechnen von Grafikdaten in Abhängigkeit der eingegebenen Formparameter.

9. Vorrichtung nach Anspruch 7 oder 8, **dadurch gekennzeichnet,**
die Lebensmittelprodukte mit einer Formvorrichtung gefertigt werden, die derart ausgebildet ist, dass der Querschnitt einer Durchgangsöffnung, durch den ein Lebensmittelstrang transportiert wird, in Abhängigkeit der Zeit oder des zurückgelegten Ausstoßweges des Lebensmittelprodukts verändert wird und vorzugsweise
die Vorrichtung mindestens zwei, vorzugsweise mehr als zwei in Transportrichtung (T) eines Lebensmittelstrangs übereinanderliegende flache Verdrängerelemente aufweist, die jeweils mindestens eine Öffnung aufweisen, durch die der Lebensmittelstrang (5) in Transportrichtung (T) bewegbar ist und einen Bewegungsmechanismus (6) zum Bewegen der flachen Verdrängerelemente (2a,b,c), derart, dass die jeweiligen Öffnungen relativ zueinander bewegbar sind, so dass sich die Querschnittsfläche der resultierenden Gesamtöffnung der sich überlagernden Öffnungen (3a,b,c) ändert.

10. Vorrichtung nach mindestens einem der Ansprüche 7 bis 9, **dadurch gekennzeichnet, dass** die Eingabeeinrichtung (21a) entweder derart ausgebildet ist, dass Zahlenwerte eingegeben werden können und/oder
dass die Form des grafisch dargestellten Lebensmittelprodukts am Bildschirm änderbar ist, insbesondere mit Hilfe eines Touchscreens (21b) oder mindestens eines auf der Benutzeroberfläche beweglichen Symbols (40).

11. Vorrichtung nach mindestens einem der Ansprüche 7 bis 10, **dadurch gekennzeichnet, dass** ein Bestätigungsmittel vorgesehen ist, zum Bestätigen, dass das Lebensmittelprodukt auf der Grundlage des dargestellten Lebensmittelprodukts produziert wird.

12. Verfahren nach mindestens einem der Ansprüche 1 bis 4, **dadurch gekennzeichnet, dass** die Lebensmittelprodukte in der Form von Hackfleischprodukten mit einer Formvorrichtung geformt werden, die derart ausgebildet ist, dass sich ein Trennmesser in einen Hackfleischstrang hinein bewegt und diesen trennt, wobei die Position des Trennmessers in Abhängigkeit der Zeit oder des zurückgelegten Ausstoßweges des Lebensmittelprodukts verändert wird.

13. Verfahren nach mindesten einem der Ansprüche 1 bis 4 sowie 12, **dadurch gekennzeichnet, dass** mindestens ein Prozessparameter, insbesondere die Förderleistung, eingegeben werden kann und weitere Prozessparameter in Abhängigkeit des mindestens einen eingegebenen Prozessparameters und der eingegebenen Formparameter berechnet werden.

## Claims

1. Method for producing food products, in particular sleeveless products of a specific form with the following steps:
- entry of form parameters,
- display of the form (41) of the food product as a function of the entered form parameters as a 2D or 3D graphic,
- calculation of process parameters as a function of the entered form parameters, wherein
at least one parameter of the following group is entered as a form parameter:
length of the formed food product, diameter of the formed food product, in particular sausage caliber, length of the front and/or rear tip of the food product, length of the food product with a constant diameter, change of the diameter as a function of the food product length, number of the diameter changes per path, wherein the graphically displayed form of the food products is modifiable by entering changed form parameters and that a changed graphic display occurs on the basis of the changed form parameters and that respectively changed process parameters are calculated

2. Method according to Claim 1, **characterized in that** either
- the form of the food products is displayed graphically as a function of the entered form parameters and corresponding process parameters are calculated subsequently or at the same time or
- that the process parameters are calculated as a function of the entered form parameters and the corresponding form of the food product is displayed graphically afterwards.

3. Method according to at least one of the Claims 1 to 2, **characterized in that**, if it is determined that the food is to be produced on the basis of a specific displayed form, a confirmation will be entered after which the food will be produced.

4. Method according to at least one of the Claims 1 bis 3, **characterized in that**
the food products are produced with a forming device (1) that is formed in a way that the cross-section of a throughput opening (4), through which a food strand is transported for forming, is changed as a function of time or of the traveled ejection path of the food product and preferably
the food product can be moved and is produced with at least two, preferably more than two flat displacer elements (2a, b, c) that are superimposed in the transport direction of a food strand (5) and that each have at least one opening (3a, b, c) through which the food strand (5) can be moved in the transport direction, and has a
movement mechanism (6) for moving the flat displacer elements (2a, b, c) in a way that the respective openings can be moved in relation to one another so that the cross-section area of the resulting overall opening of the overlapping openings changes.

5. Method according to at least one of the Claims 1 to 4, **characterized in that** at least one parameter from the following group is calculated as a process parameter: conveying capacity of the food product, in particular conveying capacity as a function of time, speed of displacer elements as a function of time, direction of the movement of the displacer elements, position of the displacer elements as a function of time or of the traveled ejection path of the food product, position of a separator blade as a function of time or of the traveled ejection path of the food product, conveying speed of the food product.

6. Method according to at least one of the Claims 1 bis 5, **characterized in that** the form parameters
are entered as numerical values via an input unit (21a) and/or
through change of the form of the graphically displayed food product on the graphic user interface of the screen (21b), in particular by means of a touchscreen or by moving of a symbol that is displayed on the graphic user interface of the screen.

7. Device for producing food products, in particular sleeveless products, in particular with a method according to at least one of the Claims 1 to 6 or 12 and 13, with
a device for ejection of a food strand,
a forming device (1) for forming of food products,
an input unit for entering form parameters,
a first calculation device for calculation of process parameters as a function of the form parameters,
a screen (21b) for display of the form of the food product as a 2D or 3D graphic as a function of the entered form parameters, wherein
at least one parameter of the following group can be entered as a form parameter:
length of the formed food product, diameter of the formed food product, in particular sausage caliber, length of the front and/or rear tip of the food product, length of the food product with a constant diameter, change of the diameter as a function of the food product length, number of the diameter changes per path wherein the graphically displayed form of the food products is modifiable by entering changed form parameters and that a changed graphic display occurs on the basis of the changed form parameters and that respectively changed process parameters are calculated.

8. Device according to Claim 7, **characterized in that** a second calculation device is provided for calculation of graphic data as a function of the entered form parameters.

9. Device according to Claim 7 or 8, **characterized in that**
the food products are produced with a forming device that is formed in a way that the cross-section of a throughput opening, through which a food strand is transported, is changed as a function of time or of the traveled ejection path of the food product and
the device preferably has at least two, preferably more than two flat displacer elements that are superimposed in the transport direction (T) of a food strand and that have each at least one opening, through which the food strand (5) can be moved in the transport direction (T), and a movement mechanism (6) for moving the flat displacer elements (2a, b, c) in a way that the respective openings can be moved in relation to one another so that the cross-section area of the resulting overall opening of the overlapping openings (3a, b, c) changes.

10. Device according to at least one of the Claims 7 to 9, **characterized in that** the input device (21a) is either formed in a way that numerical values can be entered and/or
that the form of the graphically displayed food product is modifiable on the screen, in particular by means of a touchscreen (21b) or at least one movable symbol (40) on the user interface.

11. Device according to at least one of the Claims 7 to 10, **characterized in that** a confirmation medium is provided to confirm that the food product is produced on the basis of the displayed food product.

12. Method according to at least one of the Claims 1 to 4, **characterized in that** the food products in form of minced meat products, are formed with a forming device that is formed in a way that a separator blade moves into the minced meat strand and separates such strand, wherein the position of the separator blade is changed as a function of time or of the traveled ejection path of the food product.

13. Method according to at least one of the Claims 1 to 4 as well as 12, **characterized in that** at least one process parameter, in particular the conveying capacity, can be entered and that further process parameters are calculated as a function of the at least one entered process parameter and the entered form parameters.

## Revendications

1. Procédé pour la fabrication de produits alimentaires, notamment des produits sans enveloppe, d'une forme déterminée, comprenant les étapes suivantes :
- la saisie de paramètres de forme,
- la représentation de la forme (41) du produit alimentaire, en fonction des paramètres de forme saisis, en tant que graphique en 2D ou en 3D,
- le calcul de paramètres de processus en fonction des paramètres de forme ayant été saisis,
procédé
- d'après lequel en guise de paramètres de forme, on saisit au moins un paramètre parmi ceux du groupe suivant :
longueur du produit alimentaire à former, diamètre du produit alimentaire à former, notamment calibre de saucisse, longueur du bout arrondi avant et/ou arrière du produit alimentaire, longueur du produit alimentaire avec un diamètre constant, variation du diamètre en fonction de la longueur du produit alimentaire, nombre des variations de diamètre par tronçon ou trajet,
la forme du produit alimentaire, représentée de manière graphique, pouvant être modifiée par la saisie de paramètres de forme modifiés, et une représentation graphique modifiée étant effectuée sur la base des paramètres de forme modifiés, et des paramètres de processus modifiés étant calculés en conséquence.

2. Procédé selon la revendication 1, **caractérisé en ce que**
- la forme du produit alimentaire est tout d'abord représentée graphiquement en fonction des paramètres de forme saisis, et des paramètres de processus sont calculés ensuite ou simultanément,
- ou bien les paramètres de processus sont calculés d'abord, en fonction des paramètres de forme ayant été saisis, et la forme correspondante du produit alimentaire est ensuite représentée graphiquement.

3. Procédé selon l'une au moins des revendications 1 à 2, **caractérisé en ce que** si l'on détermine que le produit alimentaire doit être produit sur la base d'une forme déterminée représentée, on saisit une confirmation, à la suite de quoi le produit alimentaire est mis en production.

4. Procédé selon l'une au moins des revendications 1 à 3, **caractérisé en ce que**
les produits alimentaires sont fabriqués à l'aide d'un dispositif de formage (1), qui est configuré de façon telle, que la section transversale d'une ouverture de passage (4) à travers laquelle est transporté un boyau de produit alimentaire pour le formage, soit modifiée en fonction du temps ou du chemin d'extrusion parcouru par le produit alimentaire, et de préférence **en ce que** le produit alimentaire est fabriqué à l'aide d'au moins deux, de préférence plus de deux éléments de refoulement (2a,b,c) plats, superposés dans la direction de transport du boyau de produit alimentaire (5), et qui présentent chacun au moins une ouverture (3a,b,c) à travers laquelle peut être déplacé le boyau de produit alimentaire (5), et
**en ce que** le dispositif de formage comprend un mécanisme de déplacement (6) pour assurer un mouvement de déplacement des éléments de refoulement (2a,b,c) plats de façon telle, que les ouvertures respectives puissent être déplacées les unes par rapport aux autres de manière à faire varier la surface de section transversale de l'ouverture globale, résultante, des ouvertures individuelles, qui se chevauchent partiellement.

5. Procédé selon l'une au moins des revendications 1 à 4, **caractérisé en ce qu'**en guise de paramètre de processus, on calcule un paramètre parmi ceux du groupe suivant : débit du produit alimentaire, notamment débit en fonction du temps, vitesse d'éléments de refoulement en fonction du temps, direction du mouvement de déplacement des éléments de refoulement, position des éléments de refoulement en fonction du temps ou du chemin d'extrusion parcouru par le produit alimentaire, position d'un couteau de sectionnement en fonction du temps ou du chemin d'extrusion parcouru par le produit alimentaire, vitesse de transport du produit alimentaire.

6. Procédé selon l'une au moins des revendications 1 à 5, **caractérisé en ce que** les paramètres de forme sont saisis par l'intermédiaire d'une unité de saisie (21a), sous forme de valeurs chiffrées, et/ou en modifiant la forme du produit alimentaire représentée de manière graphique sur la surface-utilisateur graphique de l'écran (21b), notamment à l'aide d'un écran tactile ou par déplacement d'un symbole représenté sur la surface-utilisateur graphique de l'écran.

7. Installation pour la fabrication de produits alimentaires, notamment des produits sans enveloppe, en particulier à l'aide d'un procédé selon l'une au moins des revendications 1 à 6 ou 12 et 13, l'installation comprenant
un dispositif pour extruder un boyau de produit alimentaire,
un dispositif de formage (1) pour assurer le formage des produits alimentaires,
un dispositif de saisie pour assurer la saisie de paramètres de forme,
un premier dispositif de calcul pour calculer des paramètres de processus en fonction des paramètres de forme,
un écran de visualisation (21b) pour la représentation de la forme du produit alimentaire selon un graphique en 2D ou en 3D, en fonction des paramètres de forme ayant été saisis,
installation dans laquelle
en guise de paramètres de forme, il est possible de saisir au moins un paramètre parmi ceux du groupe suivant :
longueur du produit alimentaire à former, diamètre du produit alimentaire formé, notamment calibre de saucisse, longueur du bout arrondi avant et/ou arrière du produit alimentaire, longueur du produit alimentaire avec un diamètre constant, variation du diamètre en fonction de la longueur du produit alimentaire, nombre des variations de diamètre par tronçon ou trajet,
la forme du produit alimentaire, représentée de manière graphique, pouvant être modifiée par la saisie de paramètres de forme modifiés, et une représentation graphique modifiée étant effectuée sur la base des paramètres de forme modifiés, et des paramètres de processus modifiés étant calculés en conséquence.

8. Installation selon la revendication 7, **caractérisée en ce qu'**il est prévu un deuxième dispositif de calcul pour le calcul de données graphiques en fonction des paramètres de forme saisis.

9. Installation selon la revendication 7 ou la revendication 8, **caractérisée en ce que**
les produits alimentaires sont fabriqués à l'aide d'un dispositif de formage, qui est configuré de façon telle, que la section transversale d'une ouverture de passage à travers laquelle est transporté un boyau de produit alimentaire, soit modifiée en fonction du temps ou du chemin d'extrusion parcouru par le produit alimentaire, et de préférence
**en ce que** le dispositif comprend au moins deux, de préférence plus de deux éléments de refoulement plats, superposés dans la direction de transport (T) d'un boyau de produit alimentaire, et qui présentent chacun au moins une ouverture à travers laquelle peut être déplacé le boyau de produit alimentaire (5) dans la direction de déplacement (T), et un mécanisme de déplacement (6) pour assurer un mouvement de déplacement des éléments de refoulement (2a,b,c) plats de façon telle, que les ouvertures respectives puissent être déplacées les unes par rapport aux autres de manière à faire varier la surface de section transversale de l'ouverture globale, résultante, des ouvertures individuelles (3a,b,c), qui se chevauchent partiellement.

10. Installation selon l'une au moins des revendications 7 à 9, **caractérisée en ce que** le dispositif de saisie (21a) est configuré de façon à pouvoir saisir des valeurs chiffrées, et/ou de manière à pouvoir modifier la forme du produit alimentaire représentée de manière graphique sur la surface-utilisateur graphique de l'écran, notamment à l'aide d'un écran tactile (21b) ou d'un symbole (40) déplaçable sur la surface-utilisateur de l'écran.

11. Installation selon l'une au moins des revendications 7 à 10, **caractérisée en ce qu'**il est prévu un moyen de confirmation, pour confirmer que le produit alimentaire va être produit sur la base du produit alimentaire représenté.

12. Procédé selon l'une au moins des revendications 1 à 4, **caractérisé en ce que** les produits alimentaires sous la forme de produits de viande hachée, sont mis en forme à l'aide d'un dispositif de formage, qui est conçu pour qu'un couteau de sectionnement se déplace dans un boyau de viande hachée et le sectionne, la position du couteau de sectionnement étant modifiée en fonction du temps ou du chemin d'extrusion parcouru par le produit alimentaire.

13. Procédé selon l'une au moins des revendications 1 à 4 et la revendication 12, **caractérisé en ce qu'**il est possible de saisir au moins un paramètre de processus, notamment le débit, et **en ce que** d'autres paramètres de processus peuvent être calculés en fonction dudit au moins un paramètre de processus ayant été saisi et des paramètres de forme ayant été saisis.
